# DEMANDE DE BREVET EUROPEEN

(11) **EP 1 939 144 A1**
(43) Date de publication de la demande: **02.07.2008**
(21) Numéro de dépôt: 07291153.0
(22) Date de dépôt: 26.09.2007
(51) Int. Cl.: C02F 1/46, F24H 1/00, C02F 1/461

(54) **Procédé et dispositif de protection d'un chauffe-eau electrique contre le tartre**

(30) Priorité: 22.11.2006 FR 0610240
(71) Demandeur: Atlantic Industrie, 85000 La Roche sur Yon (FR)
(72) Inventeur: Merlet Christian, 85140 Les Essarts (FR)
(74) Mandataire: Kaspar, Jean-Georges

(57) **Abrégé**

Un procédé de protection d'un chauffe-eau électrique contre le tartre utilise un dispositif de protection d'un chauffe-eau électrique contre le tartre comportant de moyens 21 d'établissement d'un courant électrique d'intensité totale supérieure à 10 mA à travers l'eau contenue dans la cuve (C) du chauffe-eau.

## Description

L'invention est relative à un procédé de protection d'un chauffe-eau électrique contre le tartre.

L'invention est également relative à un dispositif de protection d'un chauffe-eau électrique contre le tartre.

L'invention est enfin relative à un chauffe-eau électrique équipé d'un dispositif selon l'invention de protection contre le tartre.

Un premier but de l'invention est de protéger un chauffe-eau électrique contre le tartre, de manière à améliorer son efficacité et sa durée de vie.

Un deuxième but de l'invention est de fournir un dispositif de protection d'un chauffe-eau électrique contre le tartre compatible avec un dispositif de protection cathodique à courant imposé.

L'invention a pour objet un procédé de protection d'un chauffe-eau électrique contre le tartre, ledit chauffe-eau électrique comportant une cuve obturée par une bride d'obturation portant au moins un élément isolé électriquement de la cuve, caractérisé par l'établissement d'un courant électrique d'intensité totale supérieure à 10 mA à travers l'eau contenue dans la cuve.

Selon d'autres caractéristiques alternatives de l'invention :
Le dit courant électrique d'intensité totale supérieure à 10 mA est établi entre un élément isolé électriquement de la cuve et la cuve ou un autre élément isolé électriquement.
Ledit élément isolé électriquement de la cuve est une anode en titane ou métal analogue apte à assurer une protection cathodique par courant imposé.
Ledit élément isolé électriquement de la cuve est un fourreau contenant un élément chauffant ou à un élément chauffant.
Ledit courant électrique présente une intensité comprise entre 10 mA et 50 mA, de préférence voisine de 15 mA.
Ledit courant électrique est interrompu pendant des durées prédéterminées, par exemple en heures pleines.

L'invention est également relative à un dispositif de protection d'un chauffe-eau électrique contre le tartre, destiné à un chauffe-eau électrique comportant une cuve obturée par une bride d'obturation portant au moins un élément isolé électriquement de la cuve, comportant des moyens d'établissement d'un courant électrique d'intensité totale supérieure à 10 mA à travers l'eau contenue dans la cuve.

Selon d'autres caractéristiques alternatives de l'invention :
Lesdits moyens d'établissement de courant électrique d'intensité totale supérieure à 10 mA comportent une liaison à un élément isolé électriquement de la cuve, et une liaison à la cuve ou une liaison à un autre élément isolé électriquement.
Lesdits moyens d'établissement du courant électrique comportent une liaison à un fourreau contenant un élément chauffant ou à un élément chauffant.

L'invention est enfin relative à un chauffe-eau électrique équipé d'un dispositif selon l'invention de protection contre le tartre.

L'invention sera mieux comprise grâce à la description qui va suivre donnée à titre d'exemple non limitatif en référence aux dessins annexés dans lesquels :
La figure 1 représente schématiquement une vue en élévation latérale avec coupe diamétrale d'un chauffe-eau électrique selon l'invention équipé d'un dispositif selon l'invention de protection contre le tartre.
La figure 2 représente schématiquement un chronogramme illustrant un exemple de mise en oeuvre d'un procédé suivant l'invention de protection contre le tartre.
La figure 3 représente schématiquement un chronogramme d'un autre procédé selon l'invention de protection contre le tartre.

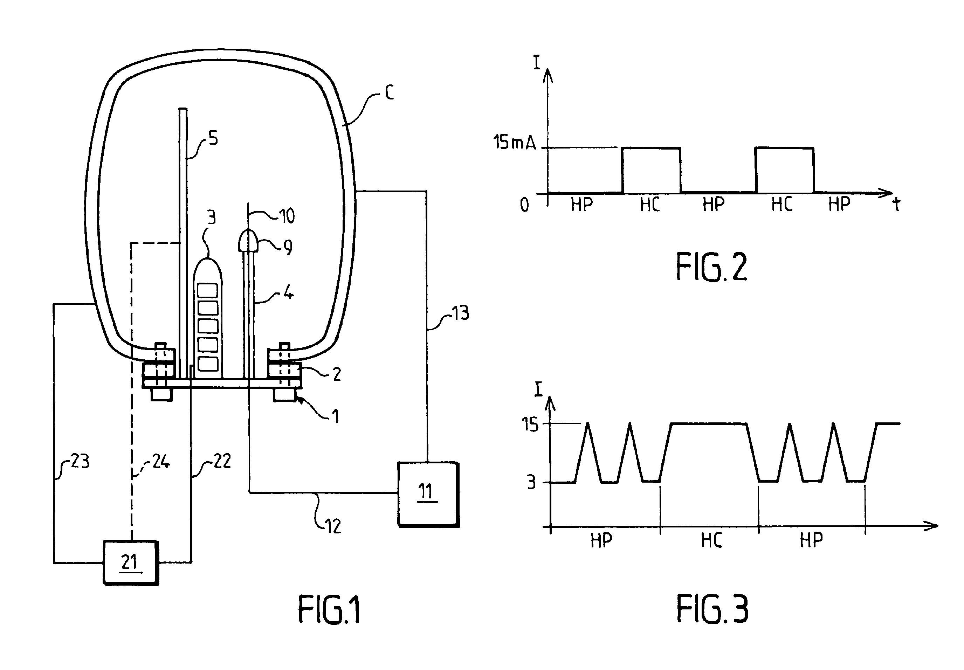

En référence à la figure 1, un chauffe-eau électrique selon l'invention présente une bride 1 destinée à obturer l'extrémité inférieure de la cuve du chauffe-eau électrique laquelle est fixée par des vis 2 avec éventuellement interposition d'un joint d'étanchéité réalisé de préférence en matériau électriquement isolant.

La bride 1 ou couvercle d'obturation porte un fourreau 3 destiné à recevoir un élément chauffant, par exemple un ensemble d'éléments stéatite comportant des enroulements de fil métallique conducteur.

La bride 1 d'obturation porte également un doigt de gant 4 contenant des éléments de sécurité et de régulation de type connu, et portant à son extrémité intérieure à la cuve de chauffe-eau un élément 9 de support isolant d'une anode 10 en métal noble, par exemple en titane.

De manière connue, l'anode 10 en titane est reliée à un générateur 11 de courant par l'intermédiaire d'un conducteur isolé 12.

Le générateur de courant 11 est également relié par un conducteur isolé 13 à la cuve C du chauffe-eau électrique.

Dans l'exemple représenté, on prévoit également un générateur 21 de courant électrique pour porter le fourreau 3 à un potentiel différent de celui de la cuve. Le générateur 21 de courant électrique peut également être relié à la cuve C du chauffe-eau par un conducteur électrique isolé 23.

Alternativement, le générateur de courant 21 peut présenté une sortie 24 constituée par un conducteur isolé relié à la canne 5 d'extraction d'eau chaude située à l'intérieure de la cuve C du chauffe-eau.

L'invention couvre également la variante non représentée dans laquelle un générateur unique de courant électrique fait tantôt fonction de générateur de courant 11 pour la protection cathodique à courant imposé, ou fait tantôt fonction de générateur de courant 21 de protection contre le tartre.

Le courant généré par le générateur 11 a généralement une intensité inférieure à 5 mA, tandis que le courant généré par le générateur 21 de protection contre le tartre a au moins pendant 10 % du temps une intensité supérieure à 10 mA.

Dans le cas de la variante non représentée où les générateurs 11 et 21 sont confondus en un générateur de courant unique, un inverseur est prévu pour brancher tantôt le circuit comprenant les conducteurs isolés 12 et 13, tantôt le circuit comprenant le conducteur isolé 22 et un conducteur isolé 23 ou 24.

Dans le cas où le circuit de protection contre le tartre comprenant le générateur de courant 21 comporte les conducteurs isolés 22 ou 24, il est avantageux d'isoler la canne 5 de soutirage d'eau chaude et le fourreau 3, de manière que le courant électrique d'intensité totale supérieure à 10 mA traverse effectivement l'eau contenue dans la cuve C du chauffe-eau.

En référence à la figure 2, un procédé selon l'invention de protection contre le tartre est adapté à un chauffe-eau électrique sans protection cathodique.

Dans cette variante, le générateur de courant électrique similaire au générateur 21 décrit en référence à la figure 1 délivre un courant de 15 mA entre la cuve C du chauffe-eau électrique et le fourreau 3 ou un élément chauffant équivalent pendant les heures creuses HC. Pendant les heures pleines HP, le générateur 21 est au repos et ne délivre aucun courant électrique, de manière à réduire la consommation électrique et le coût correspondant de la protection contre le tartre.

L'invention concerne également toute variante de procédé dans lequel le courant électrique est interrompu pendant des durées prédéterminées, ces durées prédéterminées étant suffisamment courtes pour que la couche de tartre éventuellement déposée soit d'épaisseur faible ou négligeable.

L'invention couvre également le cas d'un procédé à durée continue ou interrompue, l'essentiel étant qu'un courant électrique d'intensité totale supérieure à 10 mA traverse effectivement l'eau contenue dans la cuve C du chauffe-eau électrique.

En référence à la figure 3, un autre procédé selon l'invention concerne la protection contre le tartre d'un chauffe-eau électrique muni d'une protection cathodique à courant imposé.

Dans cette variante, on peut utiliser un générateur unique de courant électrique.

Dans cette variante également, on peut faire circuler le courant de protection contre le tartre entre l'anode 10 en titane ou métal analogue apte à assurer une protection cathodique par courant imposé et la cuve C du chauffe-eau.

Dans le cas d'eau très chargée, le chronogramme représenté à la figure 3 prévoit un courant de base de 3 mA suffisant pour assurer une protection cathodique et un courant de crête de 15 mA.

Pendant les heures pleines HP, le courant de base de 3 mA est interrompu à une ou plusieurs reprises par un pic de courant à 15 mA destiné à déchausser les particules éventuelles de tartre pouvant se déposer pendant les heures pleines HP.

Pendant les heures creuses HC, on peut prévoir un courant de protection de 15 mA, suffisant pour assurer à la fois la protection cathodique à courant imposé et la protection contre le tartre.

Des essais effectués ont montré que le courant électrique de protection contre le tartre est efficace dès lors que l'intensité du courant électrique est supérieure à 10 mA.

Pour éviter toute acidification ou dégradation de l'eau, on prévoit que le courant électrique de protection soit généralement inférieur à 50 mA.

Des essais ont montré qu'une valeur de 15 mA est généralement suffisante et efficace pour assurer une protection contre le tartre.

L'invention décrite en référence à plusieurs modes de réalisation n'y est nullement limitée, mais couvre au contraire toute modification de forme et toute variante de réalisation dans le cadre et l'esprit de l'invention défini par les revendications annexées.

## Revendications

1. Procédé de protection d'un chauffe-eau électrique contre le tartre, ledit chauffe-eau électrique comportant une cuve (C) obturée par une bride d'obturation portant au moins un élément (3) isolé électriquement de la cuve (C), **caractérisé par** l'établissement d'un courant électrique d'intensité totale supérieure à 10 mA à travers l'eau contenue dans la cuve.

2. Procédé selon la revendication 1, **caractérisé par le fait que** ledit courant électrique d'intensité totale supérieure à 10 mA est établi entre un élément (3 ou 10) isolé électriquement de la cuve et la cuve (C) ou un autre élément (5) isolé électriquement.

3. Procédé selon la revendication 2, **caractérisé par le fait que** ledit élément isolé électriquement de la cuve est une anode (10) en titane ou métal analogue apte à assurer une protection cathodique par courant imposé.

4. Procédé selon la revendication 2 ou la revendication 3, **caractérisé par le fait que** ledit élément isolé électriquement de la cuve est un fourreau (3) contenant un élément chauffant ou un élément chauffant.

5. Procédé selon la revendication 1, **caractérisé par le fait que** ledit courant électrique présente une intensité comprise entre 10 mA et 50 mA, de préférence voisine de 15 mA.

6. Procédé selon l'une quelconque des revendications 1 à 5, **caractérisé par le fait que** ledit courant électrique est interrompu pendant des durées prédéterminées, par exemple en heures pleines.

7. Dispositif de protection d'un chauffe-eau électrique contre le tartre, destiné à un chauffe-eau électrique comportant une cuve (C) obturée par une bride d'obturation portant au moins un élément (3) isolé électriquement de la cuve (C), comportant des moyens d'établissement (21) d'un courant électrique d'intensité totale supérieure à 10 mA à travers l'eau contenue dans la cuve.

8. Dispositif selon la revendication 7, **caractérisé par le fait que** lesdits moyens d'établissement (21) de courant électrique d'intensité totale supérieure à 10 mA comportent une liaison (22) à un élément (3 ou 10) isolé électriquement de la cuve (C), et une liaison (23) à la cuve (C) ou une liaison (24) à un autre élément (5) isolé électriquement.

9. Dispositif selon la revendication 7 ou la revendication 8, **caractérisé par le fait que** lesdits moyens d'établissement (21) du courant électrique comportent une liaison (22) à un fourreau (3) contenant un élément chauffant ou à un élément chauffant.

10. Chauffe-eau électrique équipé d'un dispositif selon l'invention de protection contre le tartre selon l'une quelconque des revendications 7 à 9.
